Europäisches Patentamt

European Patent Office

Office européen des brevets

(19)

(11) **EP 0 740 165 B1**

(12) **FASCICULE DE BREVET EUROPEEN**

(45) Date de publication et mention
de la délivrance du brevet:
**30.08.2000 Bulletin 2000/35**

(51) Int Cl.$^7$: **G01S 13/53**

(21) Numéro de dépôt: **96400831.2**

(22) Date de dépôt: **18.04.1996**

(54) **Procédé et dispositif de traitement de signel pour lever l'ambiguité d'un radar Doppler**

Signalbearbeitungsverfahren und Vorrichtung zum Entfernen von Mehrdeutigkeiten in einem
Doppler-Radar

Method and device for signal processing for removing ambiguity in a Doppler radar

(84) Etats contractants désignés:
**DE FR GB IT**

(30) Priorité: **25.04.1995 FR 9504928**

(43) Date de publication de la demande:
**30.10.1996 Bulletin 1996/44**

(73) Titulaire: **THOMSON-CSF**
**75008 Paris (FR)**

(72) Inventeurs:
• **Aubry, Jean**
**92402 Courbevoie Cedex (FR)**

• **Decombe, Jean-Marc**
**92402 Courbevoie Cedex (FR)**

(74) Mandataire: **Benoit, Monique et al**
**Thomson-CSF Propriété Intellectuelle,**
**13, Avenue du Président Salvador Allende**
**94117 Arcueil Cédex (FR)**

(56) Documents cités:
**EP-A- 0 434 503        FR-A- 2 683 913**

## Description

La présente invention a pour objets un procédé et un dispositif de traitement de signal pour un radar Doppler ambigu en vitesse, permettant de lever l'ambiguïté vitesse avec une précision et une résolution optimisées.

Elle s'applique plus particulièrement aux radars à forme d'onde Doppler habituelle, c'est-à-dire émettant successivement des rafales d'impulsions dont la fréquence porteuse et/ou la fréquence de récurrence peuvent varier d'une rafale à l'autre de manière à ce que la vitesse ambiguë associée à chaque rafale soit elle-même variable. On s'intéresse surtout, bien que non exclusivement, aux radars BFR qui ne sont ambigus qu'en vitesse. En effet, l'ambiguïté distance n'est absolument pas abordée ici.

Il existe, à l'heure actuelle, de nombreuses solutions visant à donner, à partir de mesures ambiguës de la vitesse d'un contributeur (cible, environnement...) sur chaque rafale, une estimation de la vitesse radiale vraie de ce contributeur :

Une première méthode, connue sous le nom d'algorithme dit "du reste chinois" est par exemple décrite dans le document intitulé "Range and velocity ambiguity resolution" - IEEE 1993 National Radar Conference Lynnfield - pages 146 à 149. Les essais de la Demanderesse ont montré que cette méthode, de type arithmétique, présente des performances limitées en cas de nombreux contributeurs de vitesse radiale proche.

Une autre méthode, décrite notamment dans le document intitulé "Signal Reconstruction via under-sampled signals" - IEEE 1992 International Radar Conference Brighton - pages 304 à 307, met en oeuvre un algorithme de reconstruction spectrale, ou d'expansion spectrale, qui nécessite l'émission d'une forme d'onde particulière, et qui ne peut pas s'appliquer en cas de changement de fréquence d'émission (agilité de fréquence).

Une troisième solution, détaillée dans le document intitulé "Estimation Doppler non ambiguë : approche basée sur les phases de signaux complexes" - International Conference on radar 94 - pages 650 à 655, préconise, dans le cas d'un seul contributeur, l'estimation de la dérivée temporelle de la phase des signaux complexes reçus.

Par ailleurs, on connaît également une méthode de lever d'ambiguïté vitesse dans laquelle, après traitement classique des échantillons reçus pour une rafale par transformée de Fourier discrète, on recherche une pluralité de coïncidences en position sur les raies du spectre fréquentiel pour différentes vitesses ambiguës pour élaborer une vitesse radiale vraie. Une telle méthode est par exemple décrite dans le document intitulé "Resolution of velocity ambiguities for MPRF frequency agile radars in multiple target environment" - IEEE International Conference 1990-pages 595 à 599. Le principal inconvénient de cette méthode, lié à l'utilisation de filtres de transformée de Fourier discrète, est que la résolution en vitesse est limitée à 1/N si N est le nombre d'échantillons disponibles pour réaliser la transformée de Fourier.

La présente invention a pour but principal de pallier les inconvénients et limitations des méthodes connues précitées. Elle propose notamment un procédé de traitement pour le lever d'ambiguïté vitesse capable de travailler en contexte multicontributeurs, en utilisant une forme d'onde Doppler classique, et ce, avec un pouvoir de résolution amélioré.

Les objectifs précédents sont atteints en effectuant selon l'invention, un lever d'ambiguïté vitesse par recherche des coïncidences entre hypothèses non seulement en position, mais aussi en rapport signal à bruit, et ce à partir d'une analyse spectrale autorégressive qui permet d'accroître le pouvoir de résolution.

Plus précisément, un premier objet de la présente invention est un procédé de traitement de signal radar sur les échantillons reçus en écho à l'émission d'une pluralité de rafales d'impulsions de fréquence porteuse et/ou de fréquence de récurrence différentes de rafale à rafale, de façon à pouvoir associer à chaque rafale j, une vitesse ambiguë $V_a^j$ propre, le procédé étant caractérisé en ce qu'il comporte les étapes suivantes, effectuées de manière glissante sur un nombre prédéterminé M de rafales :

- Pour chaque rafale j, l'entier j variant de 1 à M :

  • On effectue une analyse autorégressive sur les $N_j$ échantillons du signal reçu en écho à l'émission de la rafale j de façon à extraire au maximum un nombre p prédéfini, correspondant à autant de contributeurs possibles, de positions spectrales $\alpha_i^j$, l'entier i variant de 1 à p, des composantes dudit signal ;

  • On estime le rapport signal à bruit $\beta_i^j$ de chacune des composantes dudit signal ;

  • Pour chaque position spectrale $\alpha_i^j$ extraites, on construit des hypothèses en estimant toutes les vitesses non ambiguës possibles $V_i^j(k)$, l'entier k étant choisi dans un intervalle tel que les vitesses non ambiguës appartiennent à un domaine de vitesse borné prédéterminé.

- Pour chaque vitesse non ambiguë estimée, on estime la position correspondante $\alpha_i^l(k)$ sur les M-1 autres rafales ;

  • On recherche si la position estimée coïncide en position et en rapport signal à bruit avec une position spectrale extraite, et l'on valide le cas échéant l'hypothèse correspondante sur la vitesse non ambiguë ;

  • On déduit des vitesses non ambiguës relatives aux hypothèses validées pour les M rafales une valeur non ambiguë de la vitesse réelle.

Avantageusement, le procédé selon l'invention peut en outre opérer un pistage sur les vitesses radiales vraies qui ont été reconstituées de manière à associer, lorsque cela est possible, ces vitesses. Une mise en oeuvre astucieuse du pistage dans l'algorithme de lever d'ambiguïté permet, selon l'invention, de simplifier dans certains cas, la recherche des coïncidences et l'extraction de la vitesse réelle non ambiguë.

Plus précisément, le pistage peut comporter avantageusement une phase, préalable au lever d'ambiguïté, dans laquelle une piste existante peut être entretenue directement si l'analyse autorégressive délivre une raie dont la position spectrale $\alpha_i^j$ permet de construire une hypothèse $V_i^j(k)$ qui correspond à une valeur $\Delta v$ près avec la vitesse de la piste.

Par ailleurs, la présente invention a également pour objet un dispositif de traitement de signal pour la mise en oeuvre du procédé précédent, caractérisé en ce qu'il comporte :

-   Des moyens d'analyse autorégressive sur les $N_j$ échantillons du signal reçu en écho à l'émission de la rafale j de façon à extraire au maximum un nombre p prédéfini, correspondant à autant de contributeurs possibles, de positions spectrales $\alpha_i^j$ , l'entier i variant de 1 à p, des composantes dudit signal ;
-   Des moyens d'estimation du rapport signal à bruit $\beta_i^j$ de chacune des composantes dudit signal ;
-   Des moyens de construction d'hypothèses en estimant toutes les vitesses non ambiguës possibles $V_i^j(k)$, l'entier k étant choisi dans un intervalle tel que les vitesses non ambiguës appartiennent à un domaine de vitesse borné prédéterminé ;
-   Des moyens pour estimer, pour chaque vitesse ambiguë estimée, la position correspondante $\hat{\alpha}_i^l(k)$ sur les M-1 autres rafales ;
-   Des moyens de recherche de coïncidence en position et en rapport signal à bruit de la position estimée avec une position spectrale extraite, et des moyens de validation le cas échéant de l'hypothèse correspondante sur la vitesse non ambiguë pour déduire des vitesses non ambiguës relatives aux hypothèses validées pour les M rafales une valeur non ambiguë de la vitesse réelle.

L'invention, ainsi que les avantages qu'elle procure, seront mieux compris au vu de la description suivante, faite en référence aux figures annexées données à titre d'exemples non limitatifs, dans lesquelles :

-   La figure 1 illustre, sous forme de synoptique simplifié, les moyens de mise en oeuvre des deux phases principales du procédé selon l'invention ;
-   La figure 2 détaille un mode de réalisation possible des moyens permettant de faire une modélisation autorégressive ;
-   La figure 3 illustre, sous forme de synoptique, les différentes opérations mises en oeuvre pour le lever d'ambiguïté vitesse selon l'invention pour une rafale j ;
-   La figure 4 illustre l'application du procédé selon l'invention au cas non limitatif où le nombre de rafales considéré est égal à 2, dans une configuration à deux contributeurs ;
-   La figure 5 illustre un algorithme complet associant, selon l'invention, le lever d'ambiguïté à un pistage.

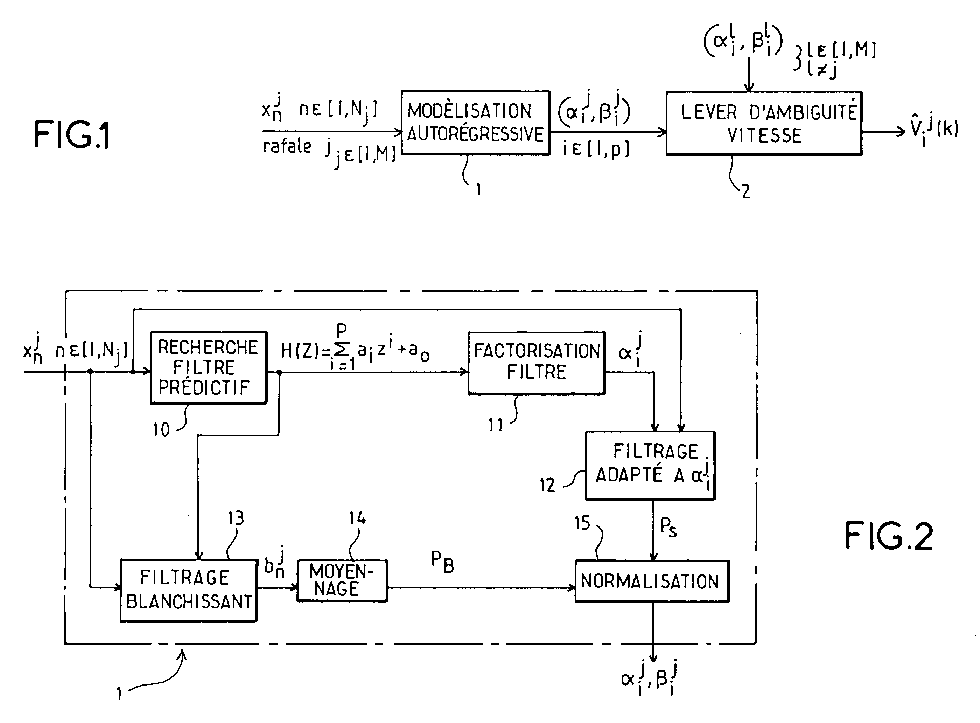

En référence à la figure 1, un dispositif mettant en oeuvre le procédé de traitement de signal selon l'invention comporte un premier module 1 réalisant une modélisation autorégressive du signal reçu en réponse à une rafale j comportant un nombre $N_j$ d'impulsions de manière à délivrer la position $\alpha_i^j$ et le rapport signal à bruit $\beta_i^j$ de chaque raie obtenue par cette modélisation, suivi d'un second module 2 effectuant le lever d'ambiguïté vitesse proprement dit.

On rappelle ci-après quelques principes sur les analyses autorégressives :

Le signal reçu par le radar en provenance des cibles et du contexte résulte de la sommation de multiples réflexions qui dépendent de la présentation et de la constitution des cibles, de la fréquence de travail et des conditions d'environnement (fouillis). Le signal résultant, auquel se superpose le bruit thermique propre du récepteur radar supposé blanc et gaussien, est aléatoire.

L'hypothèse fondamentale de la modélisation autorégressive est d'admettre que ce signal est localement stationnaire au second ordre pendant une durée d'observation qui, dans le cas classique d'un radar Doppler à impulsions fonctionnant en agilité de fréquence, correspond à une rafale de $N_j$ impulsions émises sur une fréquence donnée.

Sous cette hypothèse, et d'après le théorème de décomposition de Wold, un tel signal est modélisable comme étant la sortie d'un filtre prédictif tout pôle à p pôles, excité par du bruit blanc.

Le signal a donc un spectre comportant au plus p raies, p correspondant à l'ordre prédéfini du filtre. On constate expérimentalement qu'un ordre faible, typiquement de 2 à 5 pôles, convient pour modéliser les signaux radars.

Il existe différents algorithmes de calcul des coefficients du modèle, notamment l'algorithme de Burg ou celui de Marple. Ils utilisent tous un calcul préalable de la fonction d'autocorrélation du signal évaluée sur les $N_j$ impulsions disponibles, ce qui permet de comprendre en quoi l'hypothèse de stationnarité locale au second ordre est importante.

Par rapport aux méthodes classiques d'analyses spectrales, notamment par transformée de Fourier discrète, les méthodes d'analyse autorégressive n'utilisent pas de fenêtrage de la fonction d'autocorrélation, ce qui permet un gain en résolution entre raies. On montre que cette résolution s'améliore avec le rapport signal à bruit des raies et l'ordre du modèle : On s'affranchit donc de la limitation à $1/N_j$ des méthodes classiques.

Le spectre Doppler du signal radar reçu résulte de la superposition des contributions de tous les éléments réfléchissants (cible, fouillis...). A chaque contributeur correspond une raie dans le spectre Doppler dont la position est liée à la vitesse radiale du contributeur et le niveau à la surface équivalente radar du contributeur vu au travers du bilan de liaison.

La position $\alpha_i^j$ des raies, correspondant à une détermination de la vitesse radiale d'un contributeur modulo la vitesse ambiguë $V_a^j$ propre à la rafale j, peut être obtenue aisément par factorisation du filtre obtenu, par exemple en calculant les racines du polynôme H(z) d'ordre p résultant de la transformée en z du filtre prédictif.

Soit $z_i^j$, de module $|z_i^j|$ et de phase $\varphi_i^j$, une telle racine complexe. On a les relations suivantes :

$$\varphi_i^j = 2\,\pi\,f_d\,T_R = 2\,\pi\,\alpha_i^j$$

dans lesquelles :

  $f_d$ est la fréquence Doppler.
  $T_R$ est la période de récurrence de la rafale.
  $\alpha_i^j$ est la position ambiguë de la raie Doppler.

Donc,

$$\alpha_i^j = f_d\,T_R = \left(\frac{V_i^j}{V_a^j}\right) - E\left(\frac{V_i^j}{V_a^j}\right)$$

  $V_i^j$ où est la vitesse radiale réelle (non ambiguë).
  $V_a^j$ est la vitesse ambiguë liée aux caractéristiques de la rafale.
  ($V_a^j = \frac{\lambda F_R}{2}$ si $\lambda$ est la longueur d'onde porteuse)
  $E$ est la partie entière.

Par ailleurs, pour obtenir le rapport signal à bruit $\beta_i^j$ de chaque raie, on utilise de préférence la méthode de Capon, qui consiste à effectuer un filtrage des échantillons du signal d'entrée par un filtre adapté à chaque raie i, c'est-à-dire qui présente une transmittance égale à 1 sur la raie dont on cherche le niveau, et une transmittance égale à 0 sur les (p-1) autres raies.

La puissance en sortie de ce filtre adapté correspond à la puissance de la raie i que l'on peut normaliser par une estimation de la puissance de bruit obtenue par ailleurs.

On a détaillé sur la figure 2 un mode de réalisation possible pour le module 1 de modélisation autorégressive de la figure 1, fonctionnant comme expliqué précédemment :

Les $N_j$ échantillons $x_n^j$ de signal reçu suite à l'émission d'une rafale j d'impulsions sont délivrés à des premiers moyens 10 recherchant les coefficients $a_i$ du polynôme H(z) du filtre prédictif d'ordre p prédéfini. Des seconds moyens 11 factorisent alors le polynôme obtenu afin de délivrer un nombre p de positions spectrales $\alpha_i^j$ des composantes du signal.

La puissance de chaque raie i pour chaque position $\alpha_i^j$ est alors obtenue en passant les échantillons $x_n^j$ dans un filtre 12 adapté à la raie i de position $\alpha_i^j$, c'est-à-dire un filtre réjecteur centré sur la racine du polynôme correspondant à ladite composante. Le rapport signal à bruit $\beta_i^j$ est alors obtenu en normalisant la puissance Ps obtenue en sortie de ce filtre par la puissance de bruit $P_B$ elle-même obtenue par passage du signal d'entrée dans un filtre 13 blanchissant de fonction de transfert égale à H(z), puis par moyennage 14 sur un ensemble de cases distances . On peut avantageusement déceler une rupture du modèle prédictif si la puissance de bruit, après blanchiment du signal, augmente de façon notable.

A l'issue du traitement précédent, on a donc, pour chaque rafale j, la position $\alpha_i^j$ en vitesse radiale ambiguë et le rapport signal à bruit $\beta_i^j$ pour chaque contributeur i, l'entier i variant de 1 à p.

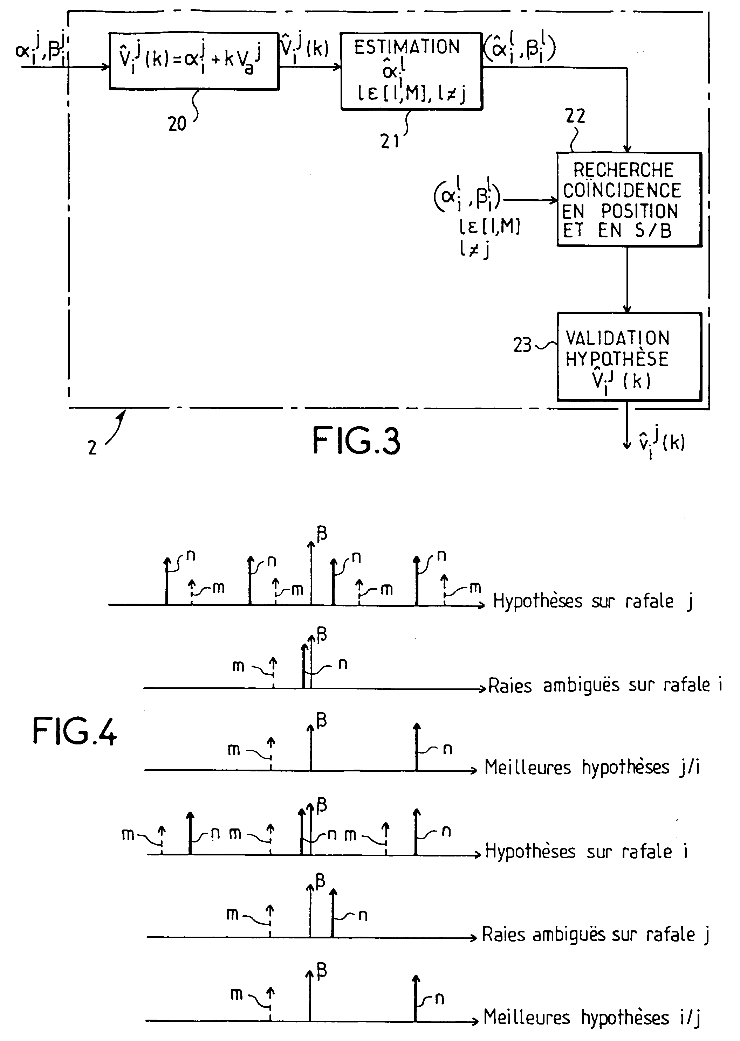

En référence à la figure 3, on va décrire un exemple de réalisation du module 2 de lever d'ambiguïté mettant en oeuvre le procédé selon l'invention.

La démarche adoptée consiste à essayer de lever l'ambiguïté sur la vitesse de façon séquentielle. On suppose que l'on a déjà émis un nombre M prédéterminé de rafales successives dont les fréquences porteuses et/ou les fréquences de récurrences varient, de façon à ce qu'une vitesse ambiguë différente $V_a^j$ puisse être associée à chaque rafale j, l'entier j variant de 1 à M. On dispose par ailleurs, pour chaque rafale j, de toutes les positions réduites possibles $\alpha_i^j$ et de tous les rapports signal à bruit $\beta_i^j$ associés.

Pour chaque rafale j, on lève l'ambiguïté vitesse en procédant comme il suit:

■ On recherche tout d'abord, par l'intermédiaire des moyens 20, toutes les hypothèses en vitesse que l'on peut considérer à partir d'une position $\alpha_i^j$, sachant que le domaine d'observation vitesse est limité par une valeur $V_{min}$ et par une valeur $V_{max}$, égales par exemple à -800 et à +800 mètres par seconde. Ces hypothèses sont explicitées mathématiquement par la relation

$$\hat{V}_i^j(k) = \left(\alpha_i^j + k\right)V_a^j$$

dans laquelle :

  $\hat{V}_i^j$ est l'hypothèse $k$ sur la vitesse radiale non ambiguë du contributeur i ;

$V_a^j$ est la vitesse ambiguë liée à la rafale j ;

$k$ est un entier appartenant à un ensemble tel que $V_i^j(k)$ appartienne à $[V_{min}, V_{max}]$.

- Pour chaque hypothèse *k,* on reconstruit alors les raies correspondantes sur les (M-1) autres rafales. Cette reconstruction, effectuée sur la figure 3 par les moyens 21, consiste à estimer la position correspondante $\hat{\alpha}_i^l(k)$ sur chacune des autres rafales, par la relation :

$$\hat{\alpha}_i^l(k) = \frac{\hat{V}_i^j(k)}{V_a^l} - E\left[\frac{\hat{V}_i^j(k)}{V_a^l}\right]$$

où *l* est un entier appartenant à [1, M], sauf j. et E [ ] est l'opérateur "partie entière".

- On recherche alors, par les moyens 22, si chaque position estimée $\alpha_i^l(k)$ coïncide en position et en rapport signal à bruit, avec une position spectrale extraite $\alpha_i^l$ pour la rafale *l* considérée.

Cela revient à dire que si le nombre complexe ayant pour amplitude $\beta_i^l$ et pour phase $\alpha_i^l$ correspond à l'hypothèse *k* qui a permis son estimation, il est racine du polynôme $P_l(z)$ défini par la relation

$$P_l(z) = \prod_{i=1}^{p}\left(z - \beta_i^l\, e^{2\pi j\,\alpha_i^l}\right)$$

En pratique, plutôt que de rechercher une racine de polynôme, il est préférable de valider l'hypothèse *k* qui permet d'obtenir une minimisation d'une fonction F continue et monotone des modules des polynômes $P_l(z)$, pour l'indice *l* différent de j et compris entre 1 et M.

Cette fonction F peut par exemple être constituée par la somme des modules $P_l(z)$, ou par le produit de ces modules.

On obtient alors, pour chaque raie de position $\alpha_i^j$ de la rafale j, la meilleure hypothèse vitesse $\hat{V}_i^j(k)$ relativement aux (M-1) autres rafales *l*.

La démarche précédente est effectuée pour chaque rafale de l'ensemble des M rafales. De préférence, on considère que l'on a pu réellement lever l'ambiguïté vitesse sur un contributeur i lorsqu'on a obtenu une coïncidence en position à une valeur prédéfinie $\Delta v$ près, et ce pour toutes les rafales de l'ensemble des M rafales. La vitesse reconstituée est alors obtenue en réalisant une moyenne sur les estimations de vitesses non ambiguës correspondant aux hypothèses coïncidentes.

Sachant que l'estimation de la position $\alpha_i^j$ par la méthode autorégressive est d'autant plus précise que le rapport signal à bruit est plus élevé, on commence de préférence le traitement pour chaque rafale en prenant la raie qui possède le plus grand $\beta_i^j$ .

Si l'association avec une raie des autres rafales est possible, on l'effectue puis on supprime du traitement, pour l'évaluation de la fonction F, toutes les raies qui ont été associées, ce qui limite d'autant le risque d'obtenir des minima parasites. On élimine également du traitement les raies dont le rapport signal à bruit est plus faible qu'un seuil S donné, car on considère qu'elles correspondent à du bruit.

Pour un ensemble de M rafales, le traitement est arrêté lorsque plus aucune association n'est possible. On réitère alors le traitement sur un autre ensemble de M rafales, en glissant par exemple d'une rafale.

A titre d'exemple illustratif, on a représenté sur la figure 4, une possibilité d'association de raies selon l'invention entre deux rafales notées i et j :

Sur le premier diagramme, on a représenté quatre hypothèses possibles pour la rafale j, d'une part pour un contributeur m, dont les raies sont en pointillés, d'autre part pour un contributeur n, dont les raies sont en trait plein. Sur le deuxième diagramme, on a représenté les raies ambiguës effectivement obtenues sur la rafale i. La coïncidence en position et en niveau de rapport signal à bruit permet de ne retenir qu'une seule hypothèse de la rafale j par rapport à la rafale i, c'est-à-dire celle dont la position ambiguë recalculée et le niveau coïncide au mieux avec les valeurs connues pour chaque contributeur m et n (troisième diagramme). Sur les trois autres diagrammes, on a représenté les mêmes données en commençant par la rafale i. En comparant le troisième et le sixième diagrammes, on constate qu'on a obtenu les mêmes hypothèses pour chaque contributeur. On valide donc ces hypothèses comme étant les positions non ambiguës de contributeurs m et n, et on en déduit leurs vitesses réelles non ambiguës.

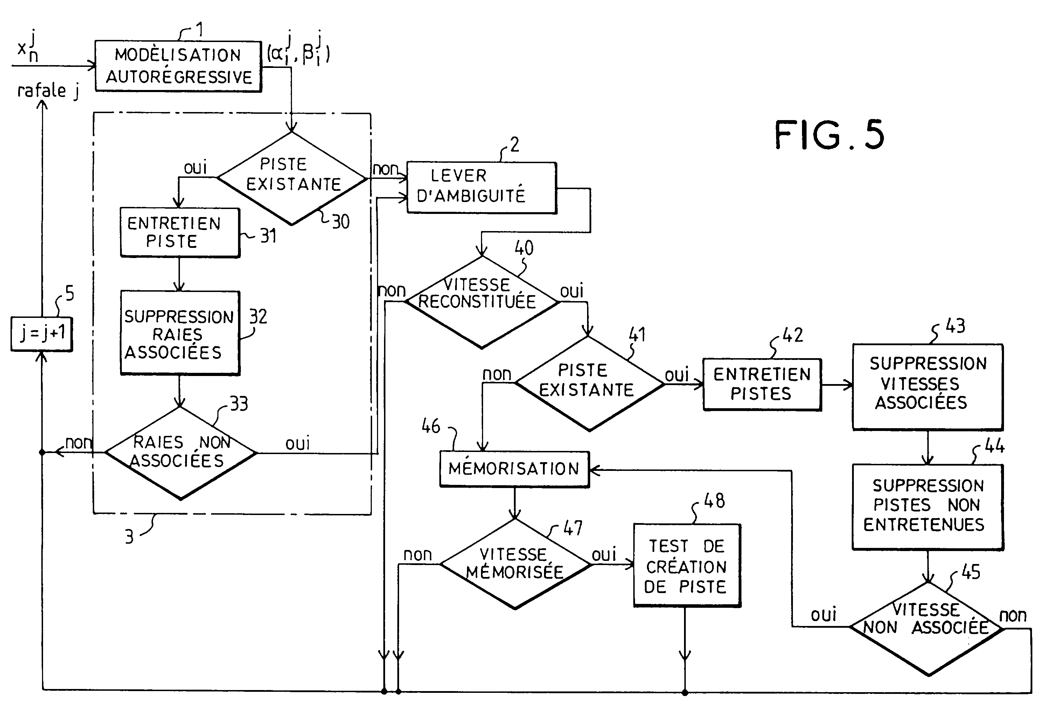

En référence à présent avec la figure 5, on va décrire un algorithme complet associant, selon l'invention, le lever d'ambiguïté vitesse à un pistage. Les opérations déjà expliquées précédemment portent les mêmes références que les moyens permettant d'assurer ces opérations. Cet algorithme montre deux phases distinctes où apparaît le pistage :

Une première phase, située juste après le lever d'ambiguïté 2, consiste en la gestion des pistes. Plus particulièrement, après le traitement de lever d'ambiguïté 2, on teste en 40 si une vitesse a été reconstituée. Si tel n'est pas le cas, on recommence en 5 le traitement précédemment décrit sur la rafale suivante j+1. Dans le cas contraire, on teste en 41 l'existence de pistes. Dans le cas où aucune piste n'a encore été créée, on mémorise en 46 la vitesse reconstituée, et on essaie de l'utiliser en 47 et 48 pour la création d'une nouvelle piste en association avec d'autres vitesses mémorisées précédemment. On considère avantageusement que l'on peut initialiser une piste lorsqu'on obtient, pour deux rafales successives, une coïncidence à une valeur $\Delta v'$ près des vitesses radiales reconstituées. Puis on recommence en 5 le traitement pour la rafale suivante j+1.

Dans le cas où il existe déjà des pistes, on essaie d'entretenir en 42 l'une de ces pistes avec la valeur courante de la vitesse reconstituée. Si on peut associer la vitesse à une piste existante, on la supprime en 43 pour qu'elle ne vienne pas gêner la suite du traitement. On en profite avantageusement pour éliminer en 44 les pistes qui n'ont pas été entretenues depuis un certain temps. Une vitesse que l'on n'a pas réussi à associer à une piste est mémorisée en 46. Dans le cas contraire, on réitère le traitement pour la rafale j+1. Les équations de pistage peuvent correspondre à un filtre classique de type $\alpha$, $\beta$ dont les paramètres évoluent selon le nombre d'entretiens $N_e$ de la piste. Vu que la valeur $\Delta v'$ diminue lorsque ce nombre augmente, il convient de limiter $N_e$ à un nombre maximal $N_{e_{max}}$.

Le modèle utilisé pour le pistage peut être un modèle à accélération radiale constante.

Selon une caractéristique avantageuse de la variante du procédé selon l'invention de la figure 5, le pistage peut également être introduit entre la modélisation autorégressive 1 permettant d'obtenir la position $\alpha_i^j$ et les rapports signal à bruit $\beta_i^j$, et le lever d'ambiguïté 2 proprement dit.

En effet, si la modélisation autorégressive 1 donne une raie pour laquelle une hypothèse possible $V_i^j(k)$ coïncide en position à une valeur $\Delta v'$ près avec la vitesse d'une piste dont l'existence est vérifiée en 30, on associe directement en 31 cette raie à l'entretien de la piste. S'il existe plusieurs raies, on choisit la plus proche en vitesse de la piste. Toute raie utilisée pour entretenir une piste à ce stade est supprimée en 32. Elle n'intervient donc pas dans toute minimisation ultérieure de la fonction F. Les autres raies sont envoyées, si elles existent, pour traitement du lever d'ambiguïté 2. Ainsi, le traitement de lever d'ambiguïté est limité aux cas non mis en piste, ce qui allège grandement le fonctionnement du traitement en contexte multicontributeurs.

L'invention qui vient d'être décrite pour résoudre le problème du lever d'ambiguïté vitesse, présente plusieurs avantages :

- Tout d'abord, l'emploi d'une modélisation autorégressive du signal à la rafale, compatible de la forme d'onde standard des radars Doppler, et permettant une haute résolution entre des raies proches sur une même rafale.
- Ensuite, l'utilisation d'un algorithme de lever d'ambiguïté par coïncidence généralisée en position et en niveau de rapport signal à bruit.
- Enfin, dans la variante où il existe également un pistage en vitesse radiale, l'entretien direct des pistes à partir des raies préalablement au lever d'ambiguïté.

Dans un contexte multicontributeurs, des essais ont montré que le procédé selon l'invention permet d'obtenir un pouvoir séparateur de quelques mètres par seconde pour des échos proches en niveau, et d'environ 10 mètres par seconde pour des échos fortement contrastés (30 dB).

## Revendications

1. Procédé de traitement de signal radar sur les échantillons reçus en écho à l'émission d'une pluralité de rafales d'impulsions de fréquence porteuse et/ou de fréquence de récurrence différentes de rafale à rafale, de façon à pouvoir associer à chaque rafale j, une vitesse ambiguë $V_a^j$ propre, le procédé étant caractérisé en ce qu'il comporte les étapes suivantes, effectuées de manière glissante sur un nombre prédéterminé M de rafales :

   - Pour chaque rafale j, l'entier j variant de 1 à M :

     • On effectue une analyse autorégressive (1) sur les $N_j$ échantillons du signal reçu en écho à l'émission de la rafale j de façon à extraire (10, 11) au maximum un nombre p prédéfini, correspondant à autant de contributeurs possibles, de positions spectrales $\alpha_i^j$, l'entier i variant de 1 à p, des composantes dudit signal ;
     • On estime (12 à 15) le rapport signal à bruit $\beta_i^j$ de chacune des composantes dudit signal ;
     • Pour chaque position spectrale $\alpha_i^j$ extraites, on construit (20) des hypothèses en estimant toutes les vitesses non ambiguës possibles $V_i^j(k)$, l'entier $k$ étant choisi dans un intervalle tel que les vitesses non ambiguës appartiennent à un domaine de vitesse borné prédéterminé.

   - Pour chaque vitesse non ambiguë estimée, on estime (21) la position correspondante $\hat{\alpha}_i^l(k)$ sur les M-1 autres rafales ;

     • On recherche (22) si la position estimée coïncide en position et en rapport signal à bruit avec une position spectrale extraite, et l'on valide (23) le cas échéant l'hypothèse correspondante sur la vitesse non ambiguë ;
     • On déduit des vitesses non ambiguës relatives aux hypothèses validées pour les M rafales une valeur non ambiguë de la vitesse réelle.

**2.** Procédé de traitement selon la revendication 1, caractérisé en ce que l'analyse autorégressive (1) comporte une étape (10) de modélisation du signal reçu comme la sortie d'un filtre prédictif à p pôles excité par du bruit blanc, et une étape (11) de factorisation dudit filtre par calcul des racines d'un polynôme d'ordre p résultant de la transformée en z du filtre prédictif, pour l'extraction desdites positions spectrales $\alpha_i^j$ .

**3.** Procédé de traitement selon la revendication 2, caractérisé en ce que l'estimation du rapport signal à bruit $\beta_i^j$ pour une composante spectrale donnée consiste à :

- Eliminer des échantillons du signal reçu, toutes les autres composantes par filtrage (12) réjecteur centré sur la racine du polynôme correspondant à ladite composante ;
- Estimer (13, 14) la puissance du bruit en sortie du filtrage adapté.

**4.** Procédé de traitement selon l'une quelconque des revendications 2 et 3, caractérisé en ce que la recherche de coïncidences pour les positions estimées $\alpha_i^j$ de la rafale j consiste à rechercher l'hypothèse qui minimise une fonction F continue et monotone des modules des polynômes relatifs aux filtres prédictifs modélisant le signal reçu sur les (M-1) autres rafales.

**5.** Procédé de traitement selon la revendication 4, caractérisé en ce que la fonction F est la somme des modules desdits polynômes.

**6.** Procédé de traitement selon la revendication 4, caractérisé en ce que la fonction F est le produit des modules desdits polynômes.

**7.** Procédé de traitement selon l'une quelconque des revendications précédentes, caractérisé en ce que la valeur non ambiguë de la vitesse réelle n'est déduite que lorsqu'on a obtenu une coïncidence à une valeur prédéfinie Δv près pour toutes les rafales j, en réalisant une moyenne sur les estimations de vitesses non ambiguës correspondant aux hypothèses coïncidentes.

**8.** Procédé de traitement selon l'une quelconque des revendications précédentes, caractérisé en ce que les différentes positions spectrales $\alpha_i^j$ sont traitées, pour une rafale j, par ordre de rapport signal à bruit $\beta_i^j$ décroissant.

**9.** Procédé de traitement selon l'une quelconque des revendications précédentes, caractérisé en ce que les positions spectrales pour lesquelles on a trouvé une coïncidence sont supprimées pour le traitement des autres positions spectrales.

**10.** Procédé de traitement selon l'une quelconque des revendications précédentes, caractérisé en ce qu'il opère en outre un pistage comprenant une première phase de pistage postérieure au lever d'ambiguïté.

**11.** Procédé de traitement selon la revendication 10, caractérisé en ce que la première phase de pistage consiste à essayer d'entretenir (42) des pistes existantes avec chaque vitesse reconstituée, à supprimer (43) les vitesses reconstituées qui ont pu être associées à une piste, et à supprimer (44) les pistes non entretenues.

**12.** Procédé de traitement selon l'une quelconque des revendications 10 et 11, caractérisé en ce que le pistage comprend en outre une seconde phase, préalable au lever d'ambiguïté, dans laquelle une piste existante peut être entretenue (31) si l'analyse autorégressive délivre une raie dont la position spectrale $\alpha_i^j$ permet de construire une hypothèse $V_i^j$ (k) qui correspond à une valeur Δv' donnée près, à la vitesse de ladite piste.

**13.** Procédé de traitement selon la revendication 12, caractérisé en ce que toute raie ayant servi à l'entretien d'une piste est supprimée (32) du traitement.

**14.** Dispositif de traitement de signal radar pour la mise en oeuvre du procédé selon l'une quelconque des revendications 1 à 13, caractérisé en ce qu'il comporte :

- Des moyens (1) d'analyse autorégressive sur les $N_j$ échantillons du signal reçu en écho à l'émission de la rafale j de façon à extraire (10, 11) au maximum un nombre p prédéfini, correspondant à autant de contributeurs possibles, de positions spectrales $\alpha_i^j$ , l'entier i variant de 1 à p, des composantes dudit signal ;
- Des moyens (12 à 15) d'estimation du rapport signal à bruit $\beta_i^j$ de chacune des composantes dudit signal ;
- Des moyens (20) de construction d'hypothèses en estimant toutes les vitesses non ambiguës possibles $V_i^j(k)$, l'entier *k* étant choisi dans un intervalle tel que les vitesses non ambiguës appartiennent à un domaine de vitesse borné prédéterminé ;
- Des moyens (21) pour estimer, pour chaque vitesse ambiguë estimée, la position correspondante $\alpha_i^j(k)$ sur les M-1 autres rafales ;
- Des moyens (22) de recherche de coïncidence en position et en rapport signal à bruit de la position estimée avec une position spectrale extraite, et des moyens (23) de validation le cas échéant de l'hypothèse correspondante sur la vitesse non ambiguë pour déduire des vitesses non ambiguës relatives aux hypothèses validées pour les M rafales une valeur non ambiguë de la vitesse réelle.

## Patentansprüche

1. Verfahren zur Radarsignalverarbeitung an Abtastwerten, die beim Senden mehrerer Impulsbündel mit unterschiedlicher Trägerfrequenz und/oder Wiederholungsfrequenz von einem Bündel zum nächsten als Echo empfangen werden, so daß jedem Bündel j eine ihm eigene, mehrdeutige Geschwindigkeit $V_a^j$ zugeordnet werden kann, wobei das Verfahren dadurch gekennzeichnet ist, daß es die folgenden Schritte enthält, die Unterbrechung an einer vorgegebenen Anzahl M von Bündeln ausgeführt werden können:

   - für jedes Bündel j, wobei die ganze Zahl j im Bereich von 1 bis M liegt:

     • Ausführen einer selbstregressiven Analyse (1) an $N_j$ Abtastwerten des Signals, das beim Aussenden des Impulses j als Echo empfangen wird, um höchstens eine im voraus definierte Anzahl p, die ebenso vielen möglichen Beitragskandidaten entspricht, von spektralen Positionen $\alpha_i^j$, wobei die ganze Zahl i im Bereich von 1 bis p liegt, der Komponenten des Signals zu entnehmen (10, 11);
     • Schätzen (12 bis 15) des Signal/Rausch-Verhältnisses $\beta_i^j$ jeder der Komponenten des Signals;
     • für jede entnommene spektrale Position $\alpha_i^j$ Konstruieren (20) von Hypothesen durch Schätzen sämtlicher möglicher, nicht mehrdeutiger Geschwindigkeiten $V_i^j(k)$, wobei die ganze Zahl k in einen Intervall gewählt wird, derart, daß die nicht mehrdeutigen Geschwindigkeiten einen vorgegebenen, begrenzten Geschwindigkeitsbereich zugehören,

   - für jede geschätzte, nicht mehrdeutige Geschwindigkeit Schätzen (21) der entsprechenden Position $\hat{\alpha}_i^j(k)$ für die M - 1 anderen Bündel;

     • Ermitteln (22), ob die geschätzte Position in bezug auf die Position und auf das Signal/Rausch-Verhältnis mit einer entnommenen spektralen Position übereinstimmt, und gegebenenfalls Validieren (23) der entsprechenden Hypothese bezüglich der die nicht mehrdeutigen Geschwindigkeit;

   • Ableiten eines nicht mehrdeutigen Wertes der wirklichen Geschwindigkeit aus nicht mehrdeutigen Geschwindigkeiten, die mit den validierten Hypothesen für die M Bündel in Beziehung stehen.

2. Verarbeitungsverfahren nach Anspruch 1, dadurch gekennzeichnet, daß die selbstregressive Analyse (1) einen Schritt (10) der Modellierung des empfangenen Signals als Ausgangssignal eines Prädiktionsfilters mit p Polen, die durch weißes Rauschen erregt werden, sowie einen Schritt (11) der Faktorisierung des Filters durch Berechnen der Wurzeln eines Polynoms der Ordnung p, das sich aus der Z-Transformation des Prädiktionsfilters ergibt, um die spektralen Positionen $\alpha_i^j$ zu entnehmen, umfaßt.

3. Verarbeitungsverfahren nach Anspruch 2, dadurch gekennzeichnet, daß die Schätzung des Signal/Rausch-Verhältnisses $\beta_i^j$ für eine gegebene Spektralkomponente darin besteht,

   - aus den Abtastwerten des empfangenen Signals sämtliche anderen Komponenten durch ein Sperrfilter (12), das auf die der Komponente entsprechende Wurzel des Polynoms zentriert ist, zu beseitigen;
   - die Rauschleistung am Ausgang des angepaßten Filters zu schätzen (13, 14).

4. Verarbeitungsverfahren nach einem der Ansprüche 2 und 3, dadurch gekennzeichnet, daß die Suche von Übereinstimmungen hinsichtlich der geschätzten Positionen $\alpha_i^j$ des Bündels j darin besteht, die Hypothese zu suchen, die eine stetige und monotone Funktion F der Beträge der Polynome minimiert, die auf die Prädiktionsfilter bezogen sind, die das empfangene Signal anhand der (M - 1) anderen Bündel modellieren.

5. Verarbeitungsverfahren nach Anspruch 4, dadurch gekennzeichnet, daß die Funktion F die Summe der Beträge der Polynome ist.

6. Verarbeitungsverfahren nach Anspruch 4, dadurch gekennzeichnet, daß die Funktion F das Produkt der Beträge der Polynome ist.

7. Verarbeitungsverfahren nach einem der vorhergehenden Ansprüche, dadurch gekennzeichnet, daß der nicht mehrdeutige Wert der wirklichen Geschwindigkeit nur abgeleitet wird, wenn eine Übereinstimmung mit einem im voraus definierten Wert $\Delta v$ für nahezu alle Bündel j erhalten wird, indem aus den Schätzungen der nicht mehrdeutigen Geschwindigkeiten, die den übereinstimmenden Hypothesen entsprechen, ein Mittelwert gebildet wird.

8. Verarbeitungsverfahren nach einem der vorhergehenden Ansprüche, dadurch gekennzeichnet, daß die verschiedenen spektralen Positionen $\alpha_i^j$ für ein Bündel j in der Reihenfolge eines abnehmenden Signal/Rausch-Verhältnisses $\beta_i^j$ verarbeitet werden.

9. Verarbeitungsverfahren nach einem der vorhergehenden Ansprüche, dadurch gekennzeichnet, daß die spektralen Positionen, für die eine Übereinstimmung ermittelt worden ist, für die Verarbeitung der anderen spektralen Positionen weggelassen werden.

10. Verarbeitungsverfahren nach einem der vorhergehenden Ansprüche, dadurch gekennzeichnet, daß es außerdem eine Spurverfolgung ausführt, die eine erste Spurverfolgungsphase nach dem Auftreten einer Mehrdeutigkeit umfaßt.

11. Verarbeitungsverfahren nach Anspruch 10, dadurch gekennzeichnet, daß die erste Spurverfolgungsphase darin besteht, vorhandene Spuren mit jeder wiederhergestellten Geschwindigkeit aufrechtzuerhalten (42), die wiederhergestellten Geschwindigkeiten, die einer Spur zugeordnet werden konnten, wegzulassen (43) und die nicht aufrechterhaltenen Spuren wegzulassen (44).

12. Verarbeitungsverfahren nach einem der Ansprüche 10 und 11, dadurch gekennzeichnet, daß die Spurverfolgung außerdem eine zweite Phase vor dem Auftreten einer Mehrdeutigkeit umfaßt, in der eine vorhandene Spur beibehalten (31) werden kann, wenn die selbstregressive Analyse eine Spektrallinie ergibt, deren spektrale Position $\alpha_i^j$ ermöglicht, eine Hypothese $V_i^j(k)$ zu konstruieren, die bis auf einen gegebenen Wert $\Delta v'$ der Geschwindigkeit der Spur entspricht.

13. Verarbeitungsverfahren nach Anspruch 12, dadurch gekennzeichnet, daß jede Spektrallinie, die der Beibehaltung einer Spur gedient hat, aus der Verarbeitung weggelassen (32) wird.

14. Vorrichtung zur Radarsignalverarbeitung für die Ausführung des Verfahrens nach einem der Ansprüche 1 bis 13, dadurch gekennzeichnet, daß sie enthält:

- Mittel (1) zur selbstregressiven Analyse an $N_j$ Abtastwerten des beim Senden des Bündels (j) als Echo empfangenen Signals, um höchstens in einer im voraus definierten Anzahl p, die ebenso vielen möglichen Beitragskandidaten entspricht, spektrale Positionen $\alpha_i^j$, wobei die ganze Zahl i im Bereich von 1 bis p liegt, der Komponenten des Signals zu entnehmen;
- Mittel (12 bis 15) zum Schätzen des Signal/Rausch-Verhältnisses $\beta_i^j$ jeder der Komponenten des Signals;
- Mittel (20) zum Konstruieren von Hypothesen durch Schätzen sämtlicher möglicher nicht mehrdeutiger Geschwindigkeiten $V_i^j(k)$, wobei die ganze Zahl k in einem Intervall gewählt wird, derart, daß die nicht mehrdeutigen Geschwindigkeiten einem vorgegebenen, begrenzten Geschwindigkeitsbereich zugehören;
- Mittel (21) zum Schätzen der entsprechenden Position $\hat{\alpha}_i^l(k)$ für die M - 1 anderen Bündel für jede geschätzte mehrdeutige Geschwindigkeit;
- Mittel (22) zum Suchen einer Übereinstimmung in bezug auf die Position und das Signal/Rausch-Verhältnis der geschätzten Position mit einer entnommenen spektralen Position und Mittel (23), die gegebenenfalls die entsprechende Hypothese in bezug auf die der nicht mehrdeutige Geschwindigkeit validieren, um aus nicht mehrdeutigen Geschwindigkeiten, die mit den validierten Hypothesen für die M Bündel in Beziehung stehen, einen nicht mehrdeutigen Wert der wirklichen Geschwindigkeit abzuleiten.

## Claims

1. Radar signal processing method regarding the echo samples received in response to the emitting of a plurality of bursts of pulses whose carrier frequency and/or recurrence frequency differ from burst to burst, in such a way as to be able to associate with each burst j, a specific ambiguous velocity $V_a^j$ the method being characterized in that it comprises the following steps, performed in a sliding manner over a predetermined number M of bursts:

- For each burst j, the integer j varying from 1 to M:

  • An autoregressive analysis (1) is performed on the $N_j$ samples of the echo signal received in response to the emitting of the burst j so as to extract (10, 11) at most a predefined number p, corresponding to so many possible contributors, of spectral positions $\alpha_i^j$, the integer i varying from 1 to p, of the components of the said signal;
  • The signal to noise ratio $\beta_i^j$ of each of the components of the said signal is estimated (12 to 15);
  • For each spectral position $\alpha_i^j$ extracted, hypotheses are constructed (20) by estimating all the possible unambiguous velocities $V_i^j(k)$, the integer $k$ being chosen within an interval such that the unambiguous velocities belong to a predetermined bounded velocity domain.

-  For each estimated unambiguous velocity, the corresponding position $\hat{\alpha}_i^l(k)$ is estimated (21) over the other M-1 bursts;

    •  A search (22) is conducted as to whether the estimated position coincides in position and in signal-to-noise ratio with an extracted spectral position, and the corresponding hypothesis regarding the unambiguous velocity is validated (23), as appropriate;
    •  An unambiguous value of the actual velocity is deduced from the unambiguous velocities relating to the hypotheses validated for the M bursts.

2.  Processing method according to Claim 1, characterized in that the autoregressive analysis (1) comprises a step (10) of modelling the signal received as the output of a predictive filter with p poles, excited by white noise, and a step (11) of factorizing the said filter by calculating the roots of a polynomial of order p resulting from the z-transform of the predictive filter, for the extraction of the said spectral positions $\alpha_i^j$.

3.  Processing method according to Claim 2, characterized in that the estimating of the signal-to-noise ratio $\beta_i^j$ for a given spectral component consists in:

    -  Eliminating from the samples of the signal received, all the other components by rejecter filtering (12) centred on the root of the polynomial corresponding to the said component;
    -  Estimating (13, 14) the power of the noise at the output of the matched filtering.

4.  Processing method according to any one of Claims 2 and 3, characterized in that the search for coincidences in respect of the estimated positions $\alpha_i^j$ of the burst j consists in searching for the hypothesis which minimizes a continuous and monotonic function f of the moduli of the polynomials relating to the predictive filters modelling the signal received on the other (M-1) bursts.

5.  Processing method according to Claim 4, characterized in that the function F is the sum of the moduli of the said polynomials.

6.  Processing method according to Claim 4, characterized in that the function F is the product of the moduli of the said polynomials.

7.  Processing method according to any one of the preceding claims, characterized in that the unambiguous value of the actual velocity is deduced only when a coincidence has been obtained to within a predefined value $\Delta v$ for all the bursts j, by averaging over the unambiguous velocity estimations corresponding to the coincident hypotheses.

8.  Processing method according to any one of the preceding claims, characterized in that various spectral positions $\alpha_i^j$ are processed, for a burst j, in order of decreasing signal-to-noise ratio $\beta_i^j$.

9.  Processing method according to any one of the preceding claims, characterized in that the spectral positions for which a coincidence has been found are eliminated for the processing of the other spectral positions.

10.  Processing method according to any one of the preceding claims, characterized in that it furthermore operates a tracking comprising a first phase of tracking subsequent to the removal of ambiguity.

11.  Processing method according to Claim 10, characterized in that the first phase of tracking consists in attempting to sustain (42) existing tracks with each reconstituted velocity, in eliminating (43) the reconstituted velocities which were able to be associated with a track, and in eliminating (44) the unsustained tracks.

12.  Processing method according to any one of Claims 10 and 11, characterized in that the tracking furthermore comprises a second phase, prior to the removal of ambiguity, in which an existing track can be sustained (31) if the autoregressive analysis yields a spectral line whose spectral position $\alpha_i^j$ makes it possible to construct a hypothesis $V_i^j(k)$ which corresponds to the velocity of the said track, to within a given value $\Delta v'$.

13.  Processing method according to Claim 12, characterized in that any spectral line having served in the sustaining of a track is eliminated (32) from processing.

14.  Radar signal processing device for implementing the method according to any one of Claims 1 to 13, characterized in that it comprises:

    -  Means (1) of autoregressive analysis on the Nj samples of the echo signal received in response to the emitting of the burst j so as to extract (10, 11) at most a predefined number p, corresponding to so many possible contributors, of spectral positions $\alpha_i^j$, the integer i varying from 1 to p, of the components of the said signal;
    -  Means (12 to 15) for estimating the signal-to-noise ratio $\beta_i^j$ of each of the components of the said signal;

- Means (20) for constructing hypotheses by estimating all the possible unambiguous velocities $V_i^j(k)$, the integer $k$ being chosen within an interval such that the unambiguous velocities belong to a predetermined bounded velocity domain;
- Means (21) for estimating, for each estimated ambiguous velocity, the corresponding position $\hat{\alpha}_i^j(k)$ on the other M-1 bursts;
- Means (22) for searching for coincidence in position and in signal-to-noise ratio of the estimated position with an extracted spectral position, and means (23) for validating as appropriate the corresponding hypothesis regarding the unambiguous velocity so as to deduce an unambiguous value of the actual velocity from the unambiguous velocities relating to the hypotheses validated for the M bursts.

FIG.1

EP 0 740 165 B1

$x_n^j$ $n \in [1,N_j]$
rafale $j$ $j \in [1,M]$ → MODÉLISATION AUTORÉGRESSIVE $\underset{1}{}$ → $(\alpha_i^j, \beta_i^j)$ $i \in [1,p]$ →

$(\alpha_i^l, \beta_i^l) \Big\}_{\substack{l \in [1,M] \\ l \neq j}}$

LEVER D'AMBIGUITÉ VITESSE $\underset{2}{}$ → $\hat{V}_i^j(k)$

FIG.2

$x_n^j$ $n \in [1,N_j]$ → RECHERCHE FILTRE PRÉDICTIF (10)

$H(Z) = \sum_{i=1}^{P} a_i z^i + a_0$ → FACTORISATION FILTRE (11) → $\alpha_i^j$

FILTRAGE ADAPTÉ A $\alpha_i^j$ (12) → $P_S$

FILTRAGE BLANCHISSANT (13) → $b_n^j$ → MOYENNAGE (14) → $P_B$ → NORMALISATION (15)

→ $\alpha_i^j, \beta_i^j$

(1)

FIG.3

FIG.4

EP 0 740 165 B1

14

$x_n^j$

rafale j

MODÉLISATION AUTORÉGRESSIVE — 1

$(\alpha_i^j, \beta_i^j)$

# FIG.5

PISTE EXISTANTE — 30

oui / non

ENTRETIEN PISTE — 31

LEVER D'AMBIGUITÉ — 2

j = j+1 — 5

SUPPRESSION RAIES ASSOCIÉES — 32

VITESSE RECONSTITUÉE — 40

oui / non

PISTE EXISTANTE — 41

oui / non

ENTRETIEN PISTES — 42

SUPPRESSION VITESSES ASSOCIÉES — 43

RAIES NON ASSOCIÉES — 33

non / oui

3

MÉMORISATION — 46

SUPPRESSION PISTES NON ENTRETENUES — 44

VITESSE MÉMORISÉE — 47

non / oui

TEST DE CRÉATION DE PISTE — 48

VITESSE NON ASSOCIÉE — 45

oui / non